# EUROPEAN PATENT SPECIFICATION

(11) **EP 0 693 170 B1**
(45) Date of publication and mention of the grant of the patent: **12.07.2000**
(21) Application number: 95900973.9
(22) Date of filing: 07.11.1994
(51) Int. Cl.: F24D 11/00, F28D 20/00

(54) **ACCUMULATOR WITH GUIDING PLATES FOR HEAT AND COOLING STORAGE**
SPEICHER MIT FÜHRUNGSPLATTEN FÜR WÄRME-UND KÄLTESPEICHERUNG
ACCUMULATEUR DOTE DE PLAQUES DE GUIDAGE POUR LE STOCKAGE DE LA CHALEUR ET DU FROID

(30) Priority: 09.11.1993 SE 9303686
(43) Date of publication of application: 24.01.1996
(73) Proprietor: Erma, Eero, 147 41 Tumba (SE)
(72) Inventor: Erma, Eero, 147 41 Tumba (SE)
(86) International application number: SE9401044
(87) International publication number: WO9513505

(56) References cited:
- EP-A- 0 045 481
- DE-A- 2 749 714
- NO-B- 53 058
- SE-B- 454 621

## Description

### Background

In a normal accumulator for storing heated or chilled fluids it is usual to use the capability of the fluids to build layers with usually the coldest fluid at the bottom and the warmest at the top of the accumulator. The layers are working best if the accumulator is high compared to its sectiondimensions and the fluid is not moving fast. The accumulator is divided into several compartments in such a way that several layers can be used and the movement of the fluid is minimised.

An accumulator divided into compartments is known earlier for example from document EP-A-0045 481 where an accumulator is divided by horizontal plates into compartments. My innovation gives three big advantages compared with the old innovation. As described below vertical guiding plates are used to define double vertical walls. In my innovation the total height of the accumulator is used at least two times to build layers whereas with horizontal plates no extra layers are created. Secondly the double vertical guiding plates stop more efficiently all mixing of water between the compartments than single horizontal plates. Thirdly in circular accumulators the heat losses are lower in my case because for example in chilled fluid storage the coldest fluid is kept in the inner compartments and the outer compartment will soon be filled with return fluid with a higher temperature.

### Description of the function

Two possible examples of the design are shown in Fig. 1 and Fig. 2 with a circular crossection and in Fig. 3 and Fig. 4 with a rectangular crossection. In the example below the system is described when used for storing chilled liquid. When using the accumulator for storing of heated liquid the fluid is pumped in the opposite direction.

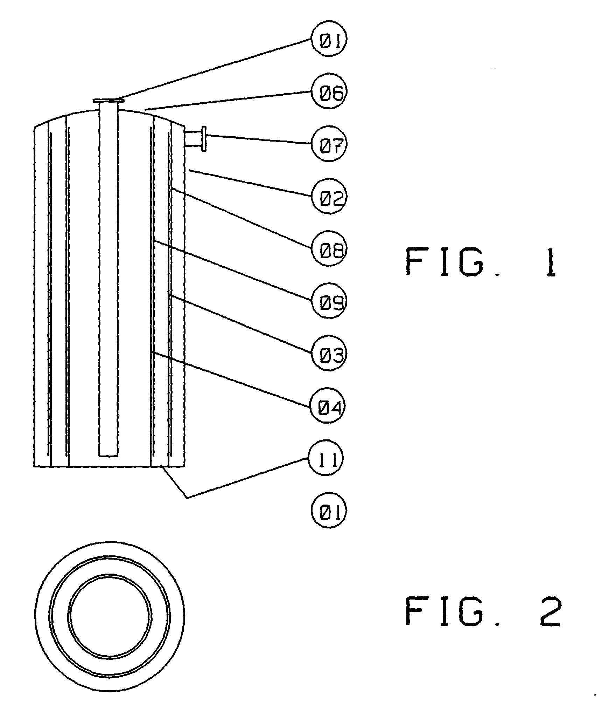

Fig. 1 and Fig. 2 show an accumulator with a circular crossection, comprising fluidconnections (01,07), the outer casing (02), guiding plates (03,04,08,09), the top (06) of the accumulator and its bottom (11). This accumulator has three compartments.

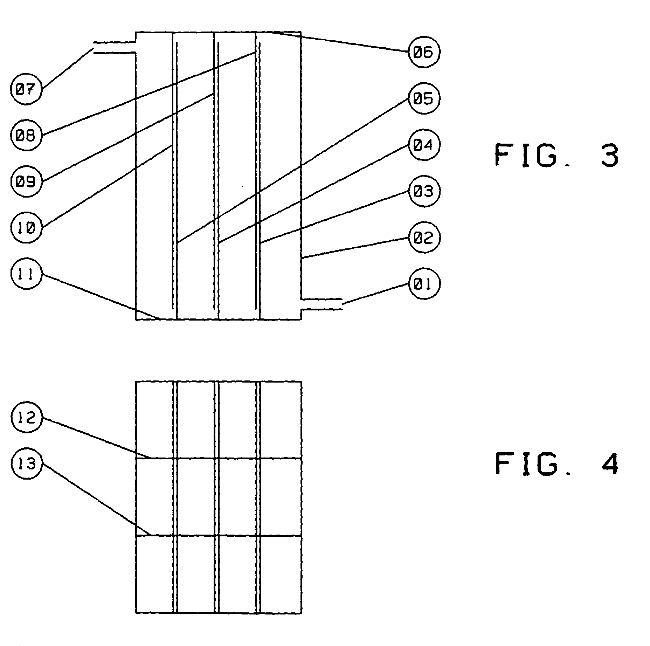

Fig. 3 and Fig. 4 show an accumulator with a rectangular crossection comprising fluidconnections (01,07), the outer casing (02), guiding plates (03,04,05,08,09,10), the top (06) of the accumulator and its bottom (11). This accumulator has four compartments and it can handle fluid with three different temperature levels because it is also divided by walls (12) and (13) into three different accumulators.

The accumulator according Fig. 3 and 4 is divided by vertical guiding plates (08,09,10) into four compartments. These guiding plates go from the top (06) of the accumulator down near to the accumulator's bottom (11) where a space is left open. Three more guiding plates (03,04,05) are installed near the above mentioned guiding plates so that compared with the width of the compartment a small space is left between the guiding plates. The three latest named guiding plates go from the bottom (11) of the accumulator near to the top (06) of the accumulator where a space is left open.

When the accumulator according Fig. 1 is charged with chilled fluid the heated fluid is pumped out through connection (07) at the top (06) of the accumulator to a cooling unit and the chilled fluid is coming back into the accumulator through connection (01) near the bottom (11) of the accumulator. The chilled fluid is filling the compartment inside guiding plate (04) from bottom and pressing the warmer fluid which was stored in this compartment upwards. The warm fluid is further depressed through the space between the guiding plates (04,09) into the next compartment and then through the space between the guiding plates (03,08) into the third compartment. A front with chilled fluid on the bottom side and warm fluid on the upper side moves up and down in the accumulator until it comes to the outlet connection (07). The temperature of the outgoing fluid is measured and when the front passes the measuring point the charging is discontinued if the temperature is low enough. In other case the charging is continued and a new front starts moving in the accumulator. The charging goes on until a cold enough front passes the measuring point. Therefore the accumulator is charged in one or several steps into the desired temperature.

When discharging the accumulator, the chilled fluid is taken out through the connection (01) and heated fluid comes in through the connection (07). The accumulator is discharging chilled fluid at the same temperature until a front coming from the connection (07) between warm and chilled fluid arrives at the connection (01). Then warmer fluid with constant temperature is taken out through the connection (01) until the next front arrives. By measuring the fluid temperature at the connection (01) it is decided when the accumulator has been discharged to such an extent that a new charging is necessary.

## Claims

1. Accumulator for storing chilled or heated fluids comprising vertical guiding plates (03,08;04,09,05,10) dividing the accumulator into a number of compartments in such a way that the wall between two compartments consists of two guiding plates (03,08;04,09,05,10) with a space between them, wherein one (08,09,10) of the said guiding plates (03,08;04,09,05,10) is connected to the top (06) of the accumulator and has a space between itself and the bottom (11) of the accumulator and the other one (03,04,05) is connected to the bottom (11) of the accumulator and has a space between itself and the top (6) of the accumulator, and there are connections (07,01) for the fluid at or close to the top (6) of the first compartment and at or close to the bottom (11) of the last compartment.

2. Accumulator according to claim 1 comprising at least one wall, the guiding plates (03,08) thereof having a circular cross-section.

3. Accumulator according to claim 1 comprising at least one wall, the guiding plates (03,08) thereof having a rectangular cross-section.

## Patentansprüche

1. Akkumulator für Akkumulierung von aufgewärmte und gekühlte Flüssigkeiten mit vertikalen Führungsplatten (03, 08, 04, 09, 05, 10) die den Akkumulator in Abteilungen teilt so das die Wand zwischen zwei Abteilungen von zwei Führungsplatten (03, 08, 04, 09, 05, 10) mit einem Abstand zwischen die Platten besteht und die eine Führungsplatte (08, 09, 10) von der genannten Zwischenwände (03, 08, 04, 09, 05, 10) mit dem Deckel des Akkumulators (06) verbunden ist und ein Abstand zu dem Boden des Akkumulators (11) hat und die Andere (03, 04, 05) mit dem Boden des Akkumulators (11)verbunden ist und ein Abstand zu dem Deckel (6)des Akkumulators hat und dass da Verbindungen (07, 01) für die Flüssigkeit in der oder nahe der Deckel (6) der ersten Abteilung und in dem Boden (11) oder nahe dem Boden der letzten Abteilung gibt's.

2. Akkumulator nach Anspruch 1 mit wenigstens eine Zwischenwand, und dass die Führungsplatten zirkulär geformt sind.

3. Akkumulator nach Anspruch 1 mit wenigstens eine Zwischenwand, und dass die Führungsplatten rektangulär geformt sind.

## Revendications

1. un accumulateur pour l,emmagasinage de liquides a chaud ou a froid , contenant des plaques a conduit vertical a ( 03,08,04,09,05,10 ) en divisant l,accumulateur a un nombre de compartiments a tel voie que le mur de paroie entre les deux compartiments se compose de deux plaques de conduite a ( 03,08,04,09,05,10 ) avec une espace intervalle entre eux , dans lequel une a ( 08,09,10 ) de plaques de conduite nommees ( 03,08,04,09,05,10 ) est reliee au sommet de (06 ) de l,accumulateur et elle a une espace intervalle entre elle meme et le fond ( 11 ) de l,accumulateur , et l,autre ( 03,04,05 ) est reliee au fond (11 ) de l,accumulateur, et elle a une espace intervalle entre elle meme et le sommet ( 6 ) de l,accumulateur, et il ya des connexions ( 07,01 ) pour le liquide ou pour fermer au sommet (6 ) du premier compartiment .

2. Un accumulateur selon la revendication 1 contenant au moins un mur , les plaques de conduit ( 03,08 ) de cela il ya une section transversalle circulaire .

3. Un accumulateur pour la revendication 1 contenant au moins un mur , les plaques de conduit ( 03,08 ) de cela il ya une section transversalle rectangulaire .
